Europäisches Patentamt

European Patent Office

Office européen des brevets

(19)

(11) Numéro de publication: **0 149 584**

**A2**

(12)

# DEMANDE DE BREVET EUROPEEN

(21) Numéro de dépôt: 85420007.8

(22) Date de dépôt: 15.01.85

(51) Int. Cl.⁴: **A 01 G 9/22**

(30) Priorité: 17.01.84 FR 8400835

(43) Date de publication de la demande:
24.07.85 Bulletin 85/30

(84) Etats contractants désignés:
BE CH IT LI SE

(71) Demandeur: RHONE-POULENC FILMS
25, quai Paul Doumer
F-92408 Courbevoie(FR)

(72) Inventeur: Grosjean, Pierre
14, Rue Alexandre Berthier
F-69110 Sainte-Foy-Les-Lyon(FR)

(74) Mandataire: Chichery, Guy et al,
RHONE-POULENC RECHERCHES Service Brevets Chimie
et Polymères Centre de Recherches de Saint-Fons B.P. 62
F-69192 St-Fons Cédex(FR)

(54) Ecran économiseur d'énergie.

(57) Les écrans thermiques de l'invention sont composés de deux baches (1) et (2) séparées par une lame d'air, la bache (1) étant constituée par un matériau composite dont une face est métallisée et réflective, l'autre face étant absorbante en IR thermique, la bache (2) étant constituée d'un film transparent aux radiations visibles et absorbant en IR thermique.

Les écrans sont utilisables à titre d'économiseur d'énergie dans les serres horticoles et maraîchères.

EP 0 149 584 A2

## ECRAN ECONOMISEUR D'ENERGIE

La présente invention concerne un nouvel écran économiseur d'énergie utilisable notamment dans les serres maraîchères ou horticoles.

Le développement des écrans thermiques dans les serres maraîchères ou horticoles a été déclenché depuis une dizaine d'années par le renchérissement des coûts énergétiques. Ce développement a vu de multiples propositions liées :

- à des études théoriques surtout thermiques,
- à des expérimentations sur le terrain de produits variés,
- au développement des écrans d'ombrage, antérieur à celui des écrans thermiques.

On a ainsi pu relever des économies d'énergie plus ou moins intéressantes et des inconvénients annexes des écrans pouvant remettre en cause leur intérêt. C'est ainsi qu'ont été relevés les inconvénients suivants :

- pertes de luminosité de jour, et aussi de durée d'éclairage... On a rapporté des expérimentations où les gains thermiques étaient annulés par la perte de lumière en amenant une baisse de production agricole, et donc de revenu global d'exploitation.
- condensations sous l'écran et gouttage sur les cultures. Il y a là risque du renforcement de maladies cryptogamiques et augmentation des coûts de traitement.
- gains thermiques insuffisants vis-à-vis des coûts d'investissement et d'installation des écrans. Sont en cause dans ce point des coûts trop élevés et surtout une efficacité des écrans trop faible.

Il a de plus été décrit que les écrans les plus efficaces thermiquement étaient ceux basés sur :

- des écrans multicouches plutôt que monocouches,
- des écrans étanches plutôt qu'ouverts, poreux...
- des écrans réflectifs en IR plutôt qu'absorbants.

Ainsi, des solutions ont été décrites pour optimiser tel ou tel facteur. L'emploi de plusieurs écrans étanches métallisés conduit à des gains thermiques importants, traduits parfois par des économies de chauffage supérieures à 90 %. Mais ceci ne satisfait pas nécessairement les autres critères d'emplois relevés.

Sur un autre plan, il est recommandé que les écrans repliés, en position jour, ne doivent pas abaisser de plus de 5 % la lumière globale reçue par les plantes cultivées. Le point est essentiellement lié au dispositif de manoeuvre de l'écran mis en place, et au placement de l'écran replié dans la serre. Ceci ne traite pas la question liée à l'emploi de l'écran lui-même :

Les écrans les plus efficaces sont métallisés, donc réflectifs en visibles et en infra-rouge thermique. Ils ne peuvent donc être déployés que la nuit. Cependant :

. des matinées ou mêmes des journées d'hiver peuvent rester froides...

. les premières heures du matin, au lever du soleil, sont souvent plus froides que les heures nocturnes. On relève alors, les maxima de température et une pointe de chauffage des installations de chauffage de serre bien régulées apparaît nécessaire.

On constate ainsi que les écrans les plus performants ne prennent pas en compte ces données, ou alors au détriment de la quantité de lumière reçue sous serre.

En résumé les éléments connus ne permettent pas d'atteindre à la fois une optimisation des gains de chauffage et des durées d'éclairage naturel de la serre. Or ces paramètres sont fondamentaux pour une exploitation optimum des cultures sous abris.

Les condensations sous écran sont un deuxième type d'inconvénient bien connu.

Ces condensations sous écran sont évidemment liées à l'humidité relative élevée de l'air au voisinage de culture arrosées par différents moyens : aspersions, goutte à goutte, etc... On relève qu'en hiver les condensations se forment le plus souvent chaque jour sur les parois des serres, notamment en nuit. Le point de rosée est atteint. Il en est de même dans beaucoup de tests décrits avec des écrans thermiques, notamment en monocouche. Il a été proposé, pour surmonter cet handicap, de prendre des écrans ouverts, à trous, etc... Il faut relever que toute solution basée sur la porosité de l'écran va diminuer l'efficacité thermique de l'écran. Mais il en est de même pour tout écran humide, notamment pour les produits les plus efficaces, réflectifs en infra-rouge. En effet l'eau est un puissant absorbant du rayonnement infra-rouge thermique. Toute buée, encore plus toute couche superficielle continue d'eau sur un écran métallisé va rendre celui-ci partiellement ou totalement absorbant du rayonnement infra-rouge. Il y a donc perte des propriétés réflectives et partiellement de l'efficacité thermique. Si un écran absorbant réemet en effet sensiblement sur ses deux faces, son efficacité va laisser en première approximation d'un % ainsi calculé :

$$\frac{\text{réflectivité à sec} \quad - \quad \text{réflectivité humide}}{2}$$

Enfin dans la demande de brevet français 81/22.463 on a revendiqué un écran double comprenant :

- un premier film complexe dont la face métallique réfléchissante est recouverte d'un film transparent laissant passer les rayons infra-rouges de longueur d'onde au moins égale à 2 microns. Cette face constitue la face 1(a) du film complexe. L'autre face du film complexe est constituée par un film support.

- un deuxième film transparent en radiations visibles et laissant passer les rayons infra-rouges de longueur d'onde au moins égale à 2 microns.

Le deuxième film est disposé immédiatement au-dessous de la face réfléchissante 1(a) et au-dessus de la source chaude.

L'écran double tel que revendiqué dans la demande de brevet français 81/22.463 présente des inconvénients notables : pertes convectives importantes, efficacité réflective faible...

Il se posait donc le problème de réaliser un écran thermique permettant d'une part de remédier aux divers inconvénients qui viennent d'être exposés et d'optimiser d'autre part le fonctionnement global par prise en compte de l'ensemble des paramètres décrits.

La présente invention répond à ce but. Plus précisément la présente invention a pour objet un écran thermique amélioré utilisable notamment à titre d'économiseur d'énergie dans les serres horticoles ou maraîchères et caractérisé en ce qu'il se compose de deux baches (1) et (2), la bache (1) étant constituée par un matériau composite dont une face dite (a) est métallisée et réflective, l'autre face dite (b) étant en matériau à propriétés absorbantes en infra-rouge thermique, la bâche (2) étant constituée d'un film transparent aux radiations visibles et absorbant en infra-rouge thermique.

On notera que le terme bâche doit être pris selon la présente invention dans un sens très générique. Ainsi les bâches peuvent être constituées de films, non tissés, matériaux composites portant éventuellement des renforts locaux. Les bâches peuvent être continues ou par panneaux assemblés...

Ainsi l'écran amélioré selon la présente invention est basé sur les éléments suivants :

- une bâche (1) composée au moins d'une surface métallisée à propriétés réflectives élevées sur une face, à propriétés absorbantes en infra-rouge thermique sur l'autre face.

- une bâche (2) composée d'une surface transparente en radiations visibles et absorbant en infra-rouge thermique.

- une mise dans l'espace appropriée des bâches (1) et (2).

- une mise en mouvement séparée des bâches (1) et (2) si nécessaire.

Avantageusement l'écran selon la présente invention est caractérisé en ce que la bâche (1) est constituée par un matériau composite dont la face métallique réflective (a) a une réflectivité supérieure à 70 % et dont la face (b) présente une absorption en infra-rouge thermique supérieure à 40 %.

Selon une variante préférentielle de l'invention la réflectivité de la face (a) est supérieure à 85 %.

Selon une autre variante avantageuse l'écran selon la présente invention est caractérisé en ce que la bâche (2) est constituée d'un film de transparence globale en visible supérieure à 70 % et d'absorption globale en infra-rouge supérieure à 45 %.

Selon une variante préférentielle la transparence globale en visible de la bâche (2) est supérieure à 80 %.

Les termes techniques servant à décrire l'invention peuvent être précisés par les éléments suivants :

- Absorption infra-rouge sur film métallisé

On désigne par $\varepsilon_{IR}$ la valeur du % de flux infra-rouge absorbé. On mesure l'absorption globale instantanée par l'échantillon, du flux émis par un corps à température voisine de l'ambiante. Elle représente donc l'absorption des matériaux vis-à-vis de radiations infra-rouge thermique à spectre large, avec maximum vers 10 µm.

Appareil utilisé EL 520 _ Société ELAN Informatique - licence C.N.R.S. - Echantillon à 20°C - Emission IR par photopile à 70°C.

- Coefficient réflectif en infra-rouge sur film métallisé

Il est donné par l'expression :

$$\mathcal{P}_{IR} = 100 - \varepsilon_{IR}$$

- Flux rayonnant à travers un écran double : Q

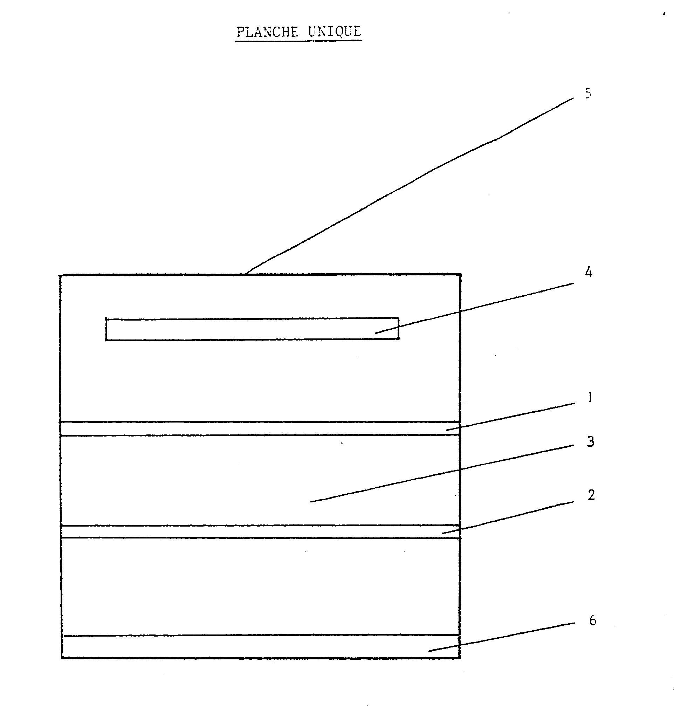

Ce flux est mesuré dans une enceinte (5) représentée sur la figure (1). Dans cette enceinte on trouve respectivement de haut en bas :

- une source R émettant en régime stable un flux IR ; cette source (4) est en général une résistance électrique régulée.

- un film (1) constituant l'un des éléments de l'écran thermique.

- un film (2) constituant le deuxième élément de l'écran thermique, les films (1) et (2) étant séparés par une lame d'air (3).

- une paroi froide (6) recevant une partie du flux émis par la source R.

La mesure du flux Q est faite par mesure du flux émis par une source "R" en régime stable (résistance électrique régulée) à travers les deux films vers un milieu extérieur à 0°C (circulation de saumure régulée). On mesure la puissance émise par la source rayonnante. D'où le flux Q en $W/m^2.h$. et au besoin la résistance thermique de l'écran.

$$R = \frac{surface \; x.(T_1) - T_2)}{Q}$$

Dans la même enceinte on mesure également les températures des deux films (dite $T_1$ pour film (1) ; appelée $T_2$ pour film (2) et $T_i$ pour la lame d'air).

- Transparence en visible

T : il s'agit du % transmis à travers le film par un rayonnement dont les longueurs d'onde s'échelonnent entre 380 et 760 nm. T est mesuré par spectrophotométrie.

- Absorption du rayonnement IR sur film transparent

C'est le % du flux IR absorbé, mesuré par spectrophotométrie entre 3 et 20 $\mu$m en lumière directe et diffuse.

Le coefficient d'absorption est désigné par $\varepsilon_{IR}$

La nature de la bâche (1) peut être très variée. On peut ainsi utiliser un film polymérique (polyester, PVC...) métallisable, le film polymérique ayant une épaisseur pouvant aller de 5 à 100 $\mu$. Le film polymérique est recouvert d'une mince couche métallique pouvant être déposée par toute technique connue (évaporation sous vide....). La couche métallique peut avoir une épaisseur variée allant de 100 Å à 600 Å ; le métal déposé peut être le chrome, l'aluminium...

En règle générale il est préférable de protéger la face métallique de la bâche (1) par dépôt d'une mince couche d'un vernis "protecteur" transparent aux IR, et dont l'épaisseur est de quelques microns. La nature du vernis protecteur n'est évidemment pas critique : il peut par exemple s'agir de vernis vinylique homopolymérique ou copolymérique. Le cas échéant le vernis protecteur pourra également être déposé sur la face polymérique non métallisée de la bâche (1).

Par la suite on définira toujours par face métallique de la bâche (1) la surface métallique elle-même ou la surface métallique revêtue de son vernis protecteur transparent.

Selon une autre variante on peut utiliser à titre de bâche (1) des films tels que précédemment définis contrecollés sur la face non métallique sur des non-tissés ou sur des films divers (polyoléfines...) afin d'en améliorer les performances d'usage.

En règle générale les matériaux de la bâche (1) correspondent à 10 à 100 g environ / $m^2$.

Les baches (2) sont en général constituées de films souples "thermiques" dont l'usage en agriculture est bien connu du spécialiste.

Ces films peuvent être des homopolymères ou des copolymères vinyliques ou des copolymères éthylène-monomère vinylique. Il peut s'agir aussi de films polyéthylène chargés spécialement.

Les films constituant les baches (2) ont une épaisseur en général comprise entre 15 et 100 µ d'épaisseur.

Parmi les matériaux utilisables à titre de bache (2) on pourra citer les films PITT (R) S 3 commercialisés par SILVALLAC et les polyéthylènes ALCUDIA (R) commercialisés par ALCUDIA.

Les baches (1) et (2) utilisables dans le cadre de la présente invention doivent présenter une bonne étanchéité à l'air. Il peut donc s'agir de structure continue ou pratiquement continue éventuellement très faiblement perforée de manière à permettre l'éventuel écoulement de gouttes d'eau, mais qui n'abaissent pas au delà de 20 % maximum les performances de l'écran.

Les baches (1) et (2) sont séparées entre elles par une lame d'air ; l'épaisseur optimum de cette lame d'air peut être déterminée aisément de manière expérimentale, ou déduite des connaissances sur les mouvements convectifs ; en général cette épaisseur est comprise entre quelques centimètres et 50 cm et de préférence entre 5 et 20 cm.

La disposition dans l'espace peut être variée mais préférentiellement la face tournée vers la source chaude aura des propriétés absorbantes en IR : il s'agit donc soit de la face (b) de la bache (1) soit de la bache (2).

Dans cette configuration d'écran la face absorbante en IR induit :

1°) Des températures de l'écran près du sol les plus élevées. Ceci est essentiel en pratique pour éviter le point de rosée sur la bache intérieure et donc des condensations et des gouttages.

2°) Des températures internes les plus élevées. L'équilibre radiatif entre un écran chaud et la végétation entraine des températures de cultures (températures de feuille) plus élevées. Toutes les données biologiques montrent l'importance de ce facteur.

Par ailleurs cette configuration permet de limiter très fortement les pertes convectives tout en évitant pratiquement totalement le phénomène de condensation.

Un objet particulier et préférentiel de la présente invention est donc constitué par un écran thermique à deux baches séparées par une lame d'air et telles que précédemment définies et caractérisé en ce que la bache (2) est située entre la source chaude et la bache (1), la face métallique de la bache (1) étant en regard de la bache (2).

Une des possibilités les plus performantes des écrans ci-dessus apparaît alors durant la mise en mouvement séparée des deux baches. Il est ainsi possible :

- au lever du jour d'enlever la bache (1) (et ainsi "d'ouvrir la serre" aux rayons solaires) tout en laissant la bache (2) (qui assure une protection thermique importante).

- on laisse ainsi peu à peu se réchauffer la partie haute, froide de la serre. l'écart de température entre partie chaude des cultures et partie haute au-dessus de l'écran va s'atténuer. Il est alors possible d'ouvrir la bache (2).

Cette manoeuvre évite les chocs thermiques, pouvant dépasser 10°C, qui se produisent par matin froid  avec une ouverture brutale et totale de l'écran. Ce processus permet aussi une double optimisation : thermique et lumière.

- par jours froids et gris, à luminosité faible, il est aussi possible de laisser tout le jour la bache (2).

On voit que toutes ces manoeuvre peuvent aisément s'automatiser, soit sur horloges, soit sur des capteurs adaptés : luminosité, température extérieure, etc...

Un autre objet particulier et préférentiel selon l'invention est constitué par un écran thermique à deux baches séparées par une lame d'air et telles que précédemment définies, la bache (1) étant située entre la source chaude et la bache (2), la bache (1) ayant sa face métallisée (a) en regard de la bache (2). Cette configuration présente également de bonnes performances.

Au total l'invention concerne donc un double écran thermique, donc chacune des baches possède des propriétés précises. Un autre aspect essentiel concerne le choix de la face inférieure : face absorbante en IR. Par les différentes variantes d'utilisation données, on voit que les configurations préconisées ici laissent plusieurs pratiques d'installations. Toutes présentent des avantages par rapport aux formules d'écrans précédemment connues. Le choix pratique de la configuration peut ainsi dépendre :

- du dispositif de manoeuvre d'écran en place,
- des contraintes d'exploitation : quel est le facteur à optimiser ?
- du mode de chauffage de la serre...

On voit que l'invention apporte des comportements de base optimisés, et laisse de larges possibilités d'adaptation qui entrent évidemment dans le domaine de l'invention.

L'exemple qui suit illustre l'invention.

## EXEMPLE

On réalise un écran thermique à partir des deux baches (1) et (2) ayant les caractéristiques suivantes :

Bache (1) : elle est constituée d'un film polyester (épaisseur 15 μ) métallisé aluminium (épaisseur 300 Å) et enduit d'un vernis protecteur mince à base de polychlorure de vinylidène (claryl [(R)] 15 S 1).

La bache (1) a un coefficient d'absorption en IR long sur sa face métallisée de 10 % (le coefficient réflectif est donc de 90 %). Le coefficient d'absorption en IR long de la face est : $\varepsilon_{IR}$ = 50 %).

Bache (2) : c'est un film polyéthylène "thermique" PITT [(R)] S 3 de SILVALLAC d'épaisseur égale à 100 μ ayant un coefficient d'absorption $\varepsilon_{IR}$ égal à 80 % alors que sa transparence dans le visible est égale à 86 %.

Les deux baches sont placées dans une enceinte fermée contenant dans sa partie la plus basse la source chaude.

On mesure en régime les températures des deux baches espacées entre-elles de 7 cm dans deux configurations différentes. On note également l'écart de température entre les deux baches et la température de la source chaude Ti ainsi que le flux rayonnant Q à travers l'écran double.

|  | Configuration 1 | Configuration 2 |
|---|---|---|
| Zone froide<br>    ciel<br>————<br>      bache<br>la plus haute<br>————<br>      bache<br>      basse<br>————<br>zone chaude : sol | Ciel<br><br>————<br>bache (1) face (a)<br>    au dessous<br>————<br>bache (2)<br><br>————<br>sol | Ciel<br><br>————<br>bache (2)<br><br>————<br>bache (1) face (a)<br>    au dessus<br>————<br>sol |
| T°C bache en position basse | 24,39 | 21,40 |
| T°C bache en position haute | 5,69 | − 1,19 |
| Δ T °C | 18,60 | 22,59 |
| Ti °C | 27,90 | 24,0 |
| Q $W/m^2/h$ | 2,54 | 2,29 |

A titre comparatif on effectue le même type de mesures sur un écran thermique dont la bache (2) est un polyéthylène standard de 100 µ d'épaisseur ($\varepsilon_{IR}$ : 30 % ; transparence : 87 %), la bache (1) étant identique ; deux configuration sont essayées.

| | ESSAIS COMPARATIFS | |
|---|---|---|
| | Configuration 1' | Configuration 2' |
| | Ciel<br>------<br>bache (1) face (a)<br>au dessous<br>------<br>bache en polyéthylène<br>standard<br>------<br>sol | Ciel<br>------<br>bache en polyéthylène<br>standard<br>------<br>bache (1) face (a)<br>au dessous<br>------<br>sol |
| T°C bache en position basse | 20,19 | 19,06 |
| T°C bache en position haute | − 0,32 | − 1,02 |
| Δ T °C | 20,51 | 20,08 |
| Ti °C | 23,14 | 23,24 |
| Q $W/m^2/h$ | 3,25 | 4,90 |

On constate ainsi l'importance des divers paramètres définis précédemment puisque dans cette configuration en dehors de l'invention les pertes radiatives sont nettement plus élevées.

Les écrans de l'invention ont été installés dans des serres selon les configurations 1 et 2 du tableau précédent ; ils ont donné totale satisfaction.

REVENDICATIONS

1°) Ecran thermique caractérisé en ce qu'il se compose de deux baches (1) et (2), la bache (1) étant constituée par un matériau composite dont une face dite (a) est métallisée et réflective, l'autre face dite (b) étant en matériau à propriétés absorbantes en IR thermique, la bache (2) étant constituée d'un film transparent aux radiations visibles et absorbant en IR thermique.

2°) Ecran selon la revendication 1, caractérisé en ce que la bache (1) est constituée par un matériau composite dont la face métallique réflective (a) a une réflectivité supérieure à 70 % et dont la face (b) présente une absorption en IR thermique supérieure à 40 %.

3°) Ecran selon l'une des revendication 1 et 2, caractérisé en ce que la bache (2) est constituée d'un film de transparence globale en visible supérieure à 70 % et d'absorption globale en IR supérieure à 45 %.

4°) Ecran selon l'une des revendications 1 à 3, caractérisé en ce que les baches (1) et (2) sont séparées entre elles par une lame d'air.

5°) Ecran selon l'une des revendications 1 à 4, caractérisé en ce que les baches sont disposées de telle manière que la surface de la bache directement en regard de la source chaude soit absorbante en IR thermique.

6°) Ecran selon l'une des revendications 1 à 5, caractérisé en ce que les deux baches sont séparées par une lame d'air et en ce que la bache (2) est située entre la source chaude et la bache (1), la face métallisée de la bache (1) étant en regard de la bache (2).

7°) Ecran selon l'une des revendications 1 à 5, caractérisé en ce que les deux baches sont séparées par une lame d'air et en ce que la bache (1) est située entre la source chaude et la bache (2) la face métallisée de la bache (1) étant en regard de la bache (2).

8°) Ecran selon l'une des revendications 1 à 7, caractérisé en ce que les deux baches (1) et (2) sont manoeuvrables séparément.

9°) Utilisation des écrans tels que définis dans l'une des revendications 1 à 8 pour économiser l'énergie dans les serres horticoles ou maraîchères.

PLANCHE UNIQUE